Europäisches Patentamt

European Patent Office

Office européen des brevets

(11) Veröffentlichungsnummer: **0 341 382**
**A1**

## EUROPÄISCHE PATENTANMELDUNG

(21) Anmeldenummer: **89102736.9**

(22) Anmeldetag: **17.02.89**

(51) Int. Cl.⁴: **F27D 5/00**

(30) Priorität: **10.05.88 DE 3815969**

(43) Veröffentlichungstag der Anmeldung:
**15.11.89 Patentblatt 89/46**

(84) Benannte Vertragsstaaten:
**AT BE CH DE ES FR GB GR IT LI LU NL SE**

(71) Anmelder: **NORTON GMBH**
**Vorgebirgsstrasse 10**
**D-5047 Wesseling(DE)**

(72) Erfinder: **Diesler, Erwin A.**
**Weiherstrasse 23**
**D-5303 Bornheim-Merten(DE)**

(74) Vertreter: **Patentanwaltsbüro Cohausz &**
**Florack**
**Postfach 14 01 20 Schumannstrasse 97**
**D-4000 Düsseldorf 1(DE)**

(54) **Tellerbrennkapsel.**

(57) Die vorliegende Erfindung betrifft eine Teller-brennkapsel in deren Rand (1) und Boden (3) und/oder Schulter (2) Aussparungen (4) vorgesehen sind.

Figur 1

EP 0 341 382 A1

Die vorliegende Erfindung betrifft eine Tellerbrennkapsel mit neuen verbesserten Eigenschaften.

Tellerbrennkapseln werden nach dem Stand der Technik als Brennhilfsmittel für das Brennen von Porzellanwaren verwendet. Insbesondere werden die Tellerbrennkapseln für die Herstellung von Porzellantellern eingesetzt. Material und Form der Tellerbrennkapsel werden jeweils in Abhängigkeit von den Betriebsbedingungen gewählt. Insbesondere sind der Brennzyklus und die Brenntemperatur zu beachten. Die Tellerbrennkapseln können in einer Vielzahl von Formen und Größen entweder für offene oder geschlossene Setzweise gefertigt werden. Sie eignen sich sowohl für das maschinelle Beladen der Brennwagen als auch für die herkömmlichen Setzmethoden von Hand. Für eine wirtschaftliche Durchführung des Brennverfahrens ist man stets bestrebt, Energie- und Gewichtseinsparungen bei den Tellerkapseln zu erreichen. Zur Erreichung von Verbesserungen wurde bisher vorwiegend mit verschiedenen Materialien experimentiert. Beispielsweise wurden Tellerbrennkapseln aus tongebundenem Siliziumkarbid hergestellt. Ebenso wurden kristallisierte Siliziumkarbide für Tellerbrennkapseln verwendet. Vielfach bestehen die Tellerbrennkapseln auch aus Mulliten.

Die bisher nach dem Stand der Technik bekannten Tellerbrennkapseln bestehen aus Schulter, Rand und Boden. Der Boden kann unter Umständen in der Mitte ein Loch enthalten. Am Rand können im unteren Teil Aussparungen, die nach unten offen sind, vorhanden sein. Entscheidende Verbesserungen bezüglich des Energieverbrauchs und der Gewichtseinsparung wurden jedoch durch diese Art der Ausformung nicht erreicht.

Die vorliegende Erfindung hat sich nunmehr die Aufgabe gestellt, Tellerbrennkapseln zur Verfügung zu stellen, mit denen sich bisher nicht bekannte Energie- und Gewichtseinsparungen erreichen lassen.

Diese Aufgabe wird dadurch gelöst, daß in dem Rand und dem Boden und/oder der Schulter der Tellerbrennkapsel Aussparungen vorgesehen sind.

Boden, Schulter und Rand sind erfindungsgemäß mit mehreren Aussparungen versehen. Bei diesen Aussparungen kann es sich um Löcher in beliebiger Form handeln. Beispielsweise können die Löcher die Form eines Kreises, eines Dreiecks, eines Rombus und ähnlicher geometrischer Ausgestaltungen haben. In Anpassung an den Boden sind die genannten geometrischen Formen in der Regel abgewandelt. Bei den Dreiecksformen sind vorzugsweise die zur Mitte des kreisförmig gestalteten Bodens gerichteten Spitzen abgeschnitten oder abgerundet.

Die Aussparungen können auch zur äußeren Begrenzung des Bodens hin offen sein. Die Öffnung erstreckt sich über die Schulter und den Rand der Tellerkapsel, so daß Schulter und Rand durch die Öffnungen unterbrochen sind. Die Öffnungen sind somit zum unteren Teil des Randes hin offen, so daß der Rand nur noch in Form von Füßen nach unten ragt.

Die Größe der Aussparungen liegt in der Regel zwischen 20 und 85 % der Gesamtfläche der Tellerbrennkapsel. Unter Gesamtfläche sind die Boden-, Schulter- und Randfläche der Tellerbrennkapsel zu verstehen. Bevorzugt werden Aussparungen in einer Größenordnung zwischen 35 und 85 %. Ganz besonders bevorzugt werden jedoch die Bereiche zwischen 70 und 80 %. Von dem letzteren Bereich sind wiederum 80 % bevorzugt. Aussparungen in dieser Größenordnung wurden bisher nicht für möglich gehalten. Denn man ging davon aus, daß Tellerbrennkapseln mit größeren Aussparungen nicht mehr ausreichend Stabilität aufweisen würden.

Das Gewicht der erfindungsgemäßen Tellerbrennkapseln kann bis zu über 2/3 leichter sein als das herkömmlicher Tellerbrennkapseln ohne Aussparungen. Da die zuzuführende Wärmemenge proportional dem Gewicht ist, lassen sich beim Brennen mit den erheblich leichteren erfindungsgemäßen Tellerbrennkapseln auch Energieeinsparungen erreichen.

Im Folgenden wird die Erfindung unter Bezugnahme auf die Zeichnungen näher erläutert.

Die Figuren 1 und 2 stellen Tellerbrennkapsel in der Seiten- und Aufsicht dar, welche insbesondere für Normalbrand geeignet sind.

Die Figur 5 stellt eine Tellebrennkapsel dar, welche für den Schnellbrand geeignet ist.

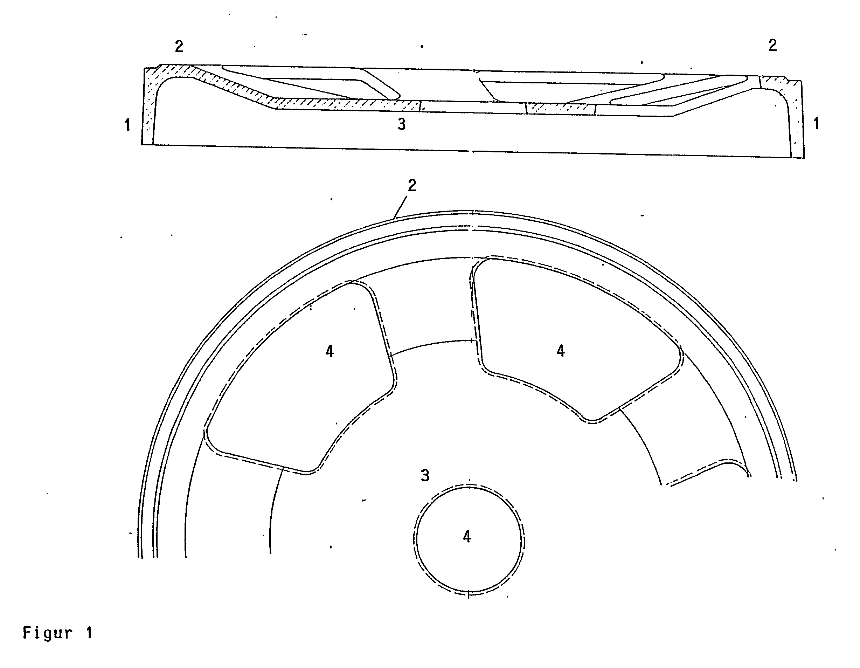

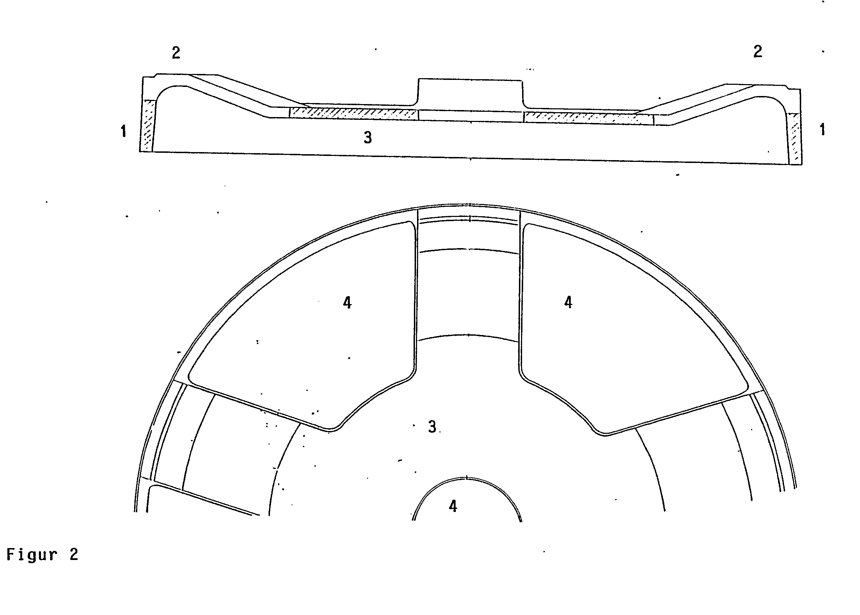

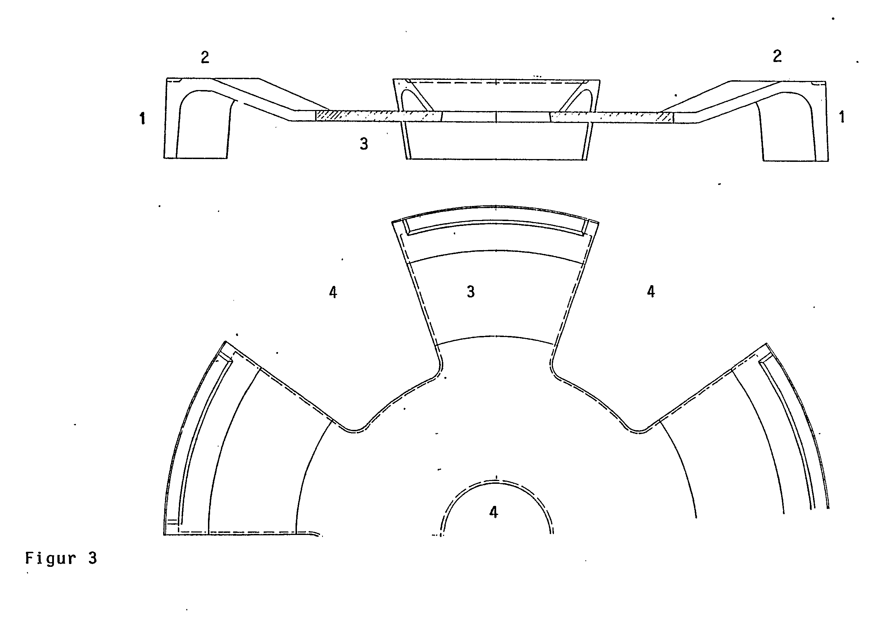

In den Figuren 1 und 2 sind Tellerbrennkapseln abgebildet, bei denen die Aussparungen 4 die Form von Löchern in beliebiger Form haben. In Anpassung an den Radius des Bodens haben die Löcher die Form von Dreiecken, bei denen die Spitzen abgeschnitten oder abgerundet sind und zur Mitte des kreisförmigen Bodens weisen. Die Schnittfläche ist der kreisförmigen Ausgestaltung des Tellerbodens angepaßt, so daß die Krümmung des äußeren Kreisumfangs des Tellerbodens entspricht. Die Gewichtsersparnis gegenüber einer herkömmlichen Tellerbrennkapsel gleicher Größe aus demselben Material beträgt bei Figur 1 19 % und bei Figur 2 28 %.

In Figur 2 ist eine Lochform dargestellt, bei der die Spitze des Dreiecks abgerundet ist. In der Mitte des Tellerbodens 3 befindet sich ein kreisrundes Loch. Derartig ausgestaltete Tellerbrennkapseln sind für normale Brennzyklen geeignet, die 20 bis 21 Stunden dauern.

In den Figuren 5 und 6 sind Tellerbrennkapseln abgebildet, welche sich für den sogenannten Schnellbrand eignen, bei welchem der Brennzyklus nur 1 bis 8 Stunden dauert. Die Aussparungen sind zur äußeren Begrenzung des Bodens 3 hin offen. Die Öffnungen durchbrechen gleichzeitig Schulter 2 und Rand 1 der Tellerbrennkapsel. Durch diese Ausgestaltung erhält der Rand 1 die Form von Füßen, welche von der Schulter 2 der Tellerbrennkapsel aus nach unten ragen. Die Energie- und Gewichtsersparnis ist bei derartig ausgestalteten Tellerbrennkapseln besonders groß; denn das Gewicht ist gegenüber herkömmlicher Kapseln aus demselben Material und mit der gleichen Größe um 67 % reduziert.

**Ansprüche**

1. Tellerbrennkapsel,
**dadurch gekennzeichnet,** daß in deren Rand (1) und Boden (3) und/oder Schulter (2) Aussparungen (4) vorgesehen sind.

2. Tellerbrennkapsel gemäß Anspruch 1,
**dadurch gekennzeichnet,** daß es sich bei den Aussparungen (4) um Löcher in beliebiger Form handelt.

3. Tellerbrennkapsel gemäß Anspruch 1,
**dadurch gekennzeichnet,** daß die Aussparungen (4) an der äußeren Begrenzung des Bodens (3), der Schulter (2) und des Randes (1) der Tellerbrennkapsel offen sind, so daß Rand·(1) und Schulter (2) durch die Aussparungen (4) unterbrochen sind.

4. Tellerbrennkapsel gemäß einem der Ansprüche 1 bis 3,
**dadurch gekennzeichnet,** daß die Größe der Aussparungen (4) zwischen 20 und 85 % der aus Boden (3), Schulter (2) und Rand (1) bestehenden Gesamtfläche der Tellerbrennkapsel liegt.

5. Tellerbrennkapsel gemäß Anspruch 4,
**dadurch gekennzeichnet,** daß die Größe der Aussparungen (4) zwischen 35 und 85 % liegt.

6. Tellerbrennkapsel gemäß Anspruch 5,
**dadurch gekennzeichnet,** daß die Größe der Aussparungen (4) zwischen 70 und 80 % liegt.

7. Tellerbrennkapsel gemäß Anspruch 6,
**dadurch gekennzeichnet,** daß die Größe der Aussparungen (4) bei 80 % liegt.

Figur 1

Figur 2

EP 0 341 382 A1

Figur 3

EP 0 341 382 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-1 081 230 (SOCIETE DES ELECTRODES ET REFRACTAIRES SAVOIE) <br> * Das ganze Dokument * <br> --- | 1-4 | F 27 D 5/00 |
| X | DE-C- 894 524 (P. KRONESTER) <br> * Ansprüche; Figuren * <br> --- | 1-4 | |
| X | FR-A-1 278 735 (ETABLISSEMENTS RENE ARMAND ET CIE) <br> * Das ganze Dokument * <br> --- | 1-4 | |
| A | FR-A-1 006 097 (M.-R. FICHTER) <br> --- | | |
| A | GB-A- 688 294 (J. HEWITT & SON) <br> ----- | | |

RECHERCHIERTE SACHGEBIETE (Int. Cl.4)

F 27 D

Der vorliegende Recherchenbericht wurde für alle Patentansprüche erstellt

| Recherchenort | Abschlußdatum der Recherche | Prüfer |
|---|---|---|
| DEN HAAG | 22-03-1989 | COULOMB J.C. |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
.............................................................................
& : Mitglied der gleichen Patentfamilie, übereinstimmendes
   Dokument

EPO FORM 1503 03.82 (P0403)